# FASCICULE DE BREVET EUROPEEN

(11) **EP 2 280 380 B1**
(45) Date de publication et mention de la délivrance du brevet: **30.08.2017**
(21) Numéro de dépôt: 10169400.8
(22) Date de dépôt: 13.07.2010
(51) Int. Cl.: G07F 7/10, G06Q 20/34

(54) **Procédé de personnalisation d'une entité électronique, et entité électronique mettant en oeuvre ce procédé**
Personalisierungsverfahren einer elektronischen Einheit, und elektronische Einheit, die dieses Verfahren umsetzt
Method for customising an electronic entity, and electronic entity implementing this method

(30) Priorité: 20.07.2009 FR 0955038
(43) Date de publication de la demande: 02.02.2011
(73) Titulaire: Oberthur Technologies, 92300 Levallois-Perret (FR)
(72) Inventeur: Cau, Philippe, 92110, Clichy (FR); Rimasson, Mathieu, 92400, Courbevoie (FR)
(74) Mandataire: Delumeau, François Guy

(56) Documents cités:
- EP-A1- 2 071 530
- DE-A1-102007 008 652
- DE-A1-102007 019 839
- DE-A1-102007 041 370
- DE-A1-102008 000 011
- US-A1- 2009 164 799

## Description

### Arrière-plan de l'invention

La présente invention se situe dans le domaine de la personnalisation d'entités électroniques.

Et s'applique préférentiellement, mais de façon non limitative, à la personnalisation d'entités électroniques portables ou de poche, et en particulier à la personnalisation de cartes à microcircuits autrement appelées cartes à puces, par exemple conformes à la norme ISO 7816.

Dans le contexte de l'invention, la notion de "personnalisation" (ou de pré-personnalisation) désigne la procédure, mise en oeuvre avant l'utilisation de l'entité électronique par son utilisateur final, au cours de laquelle une personne de confiance vient inscrire, dans une mémoire non volatile de cette entité, un certain nombre d'informations sensibles.

Cette personne de confiance peut notamment être constituée par la société qui émet la carte ou par celle qui la distribue à l'utilisateur final.

La phase d'utilisation de la carte, par l'utilisateur final, qui suit la phase de personnalisation est souvent appelée « phase d'exploitation ».

Par données sensibles, on entend en particulier des applications pouvant être mises en oeuvre par l'entité électronique, par exemple des applets, des données cryptographiques, telles que des clés ou des certificats, des données d'identification de la personne de confiance ou de l'utilisateur.

Ces données peuvent être constituées en particulier par des données biométriques, une empreinte digitale ou une photographie d'identité de l'utilisateur.

Dans l'état actuel de la technique, il est connu, en fin de personnalisation ou de pré- personnalisation, de modifier un registre d'une mémoire de l'entité électronique avec une valeur déterminée.

Le contenu de ce registre constitue donc un indicateur représentatif du fait que la personnalisation est terminée ou non.

Il est usuel que, pendant la procédure de personnalisation, la personne de confiance soit amenée à modifier des données sensibles ; il n'est donc pas souhaitable d'utiliser une mémoire dont les registres ne peuvent être écrits qu'une seule fois.

En revanche, il est indispensable, pour des raisons de sécurité, que l'utilisateur final ou toute autre personne mal intentionnée, ne puisse modifier ou effacer les données sensibles précitées une fois la procédure de personnalisation terminée.

Par conséquent, il est connu, dans l'état actuel de la technique, avant de modifier une donnée sensible de la carte à microcircuit, de tester la valeur de l'indicateur précité. Plus précisément, toute opération de modification ou d'effacement de ces données doit être interdite dès lors que l'indicateur est représentatif d'une phase de personnalisation terminée.

Malheureusement, il n'existe aucun moyen connu à ce jour pour garantir que la personne de confiance modifie la valeur de l'indicateur à l'issue de la phase de personnalisation. S'il s'avère que l'indicateur n'a pas été positionné en fin de personnalisation, l'utilisateur ou toute autre personne mal intentionné peut alors tout à fait modifier des données sensibles, ce que l'on cherche absolument à interdire en phase d'exploitation.

L'invention permet de résoudre cet inconvénient.

Le document DE 102007 019839 concerne un procédé d'utilisation initiale d'une carte à puce, cette carte à puce pouvant se trouver à l'état de première utilisation et à l'état utilisé.

### Objet et résumé de l'invention

Plus précisément, et selon un premier aspect, l'invention concerne une entité électronique comportant ;
- une première mémoire non volatile comportant au moins une donnée sensible ;
- un indicateur représentatif du fait que cette donnée sensible peut être modifiée seulement si l'indicateur a une valeur déterminée, cet indicateur étant initialisé à cette valeur déterminée ;
cette entité électronique comportant des moyens pour fournir cette donnée sensible, à un dispositif externe, en réponse à une requête, si et seulement si l'indicateur a une valeur différente de la valeur déterminée.

Corrélativement, l'invention vise également un procédé de personnalisation d'une entité électronique comportant :
- une première mémoire non volatile comportant au moins une donnée sensible ;
- un indicateur représentatif du fait que la donnée sensible peut être modifiée seulement si l'indicateur a une valeur déterminée, cet indicateur étant initialisé à cette valeur déterminée ;
ce procédé comportant une étape pour fournir la donnée sensible à un dispositif externe à l'entité électronique, en réponse à une requête, si et seulement si cet indicateur a une valeur différente de la valeur déterminée.

Dans une variante préférée de réalisation de l'invention, l'entité électronique selon l'invention comporte des moyens pour fournir au dispositif externe, en réponse à la requête, une donnée transformée, obtenue à partir de la donnée sensible, et d'un objet mémorisé dans une deuxième mémoire non volatile, si l'indicateur a la valeur déterminée précitée.

Ainsi, dans ce mode de réalisation, l'invention propose de présenter, à toute personne ou dispositif demandant à lire des données sensibles de l'entité électronique, non pas les données elles-mêmes, mais des données transformées si l'indicateur représentant la fin de la procédure de personnalisation n'a pas été positionné.

Au sens de l'invention, la notion d'« objet » est à comprendre au sens large. Elle vise notamment des données qui peuvent être combinées avec la donnée sensible. Ces données peuvent par exemple être constituées par du texte ou par une image, par exemple sous la forme d'un filigrane.

Cet objet peut aussi être constitué par une fonction logicielle apte à transformer les données sensibles, de façon perceptible ou non par l'utilisateur.

Préférentiellement, la transformation de la donnée sensible est visible par l'utilisateur. En variante, celle-ci pourrait être détectée par des moyens appropriés.

Dans un mode particulier de réalisation de l'invention, la transformation consiste à combiner la donnée sensible avec une marque visuelle.

Dans un mode particulier de réalisation, la donnée sensible est transformée par une fonction mémorisée dans la deuxième mémoire non volatile.

Lorsque cette donnée sensible est une image, par exemple une photographie, la fonction peut être une fonction de traitement d'image apte à transformer certains pixels de cette image, par exemple pour constituer des raies horizontales noires, blanches ou rouges.

On notera que le fait de retourner une donnée transformée est particulièrement avantageux, car l'utilisateur peut reconnaître au moins partiellement la donnée sensible, par exemple pour la vérifier ou la contrôler.

Dans une autre variante de réalisation de réalisation de l'invention, lorsque l'indicateur a la valeur déterminée précitée, l'entité électronique selon l'invention retourne au dispositif externe, des données indépendantes de la donnée sensible. Ces données indépendantes peuvent par exemple être constituées par un message d'erreur ou par une marque visuelle (icône, texte, ...), cette marque visuelle pouvant indiquer que l'entité électronique est en phase de personnalisation.

Dans ce cas très particulier, on dira que cette marque visuelle se substitue à la donnée sensible demandée.

Dans un mode de réalisation particulier, l'invention propose de protéger l'indicateur avec des moyens complémentaires.

Par exemple, dans un mode particulier de l'invention, l'indicateur est mémorisé dans un registre de la première mémoire non volatile, ce registre ne pouvant être modifié qu'une seule fois.

Ainsi, si le registre a effectivement été modifié en fin de procédure de personnalisation, il est impossible à une personne malintentionnée de rebasculer l'indicateur, temporairement ou non, pour revenir en phase de personnalisation.

Dans ce mode de réalisation particulier, la protection de la mémoire contre toute réécriture peut être effectuée de façon matérielle ou logicielle.

En variante, l'indicateur peut être mémorisé dans un registre accessible après authentification de l'utilisateur ou du dispositif demandant accès aux données sensibles.

En particulier, l'indicateur peut être mémorisé dans un fichier protégé par une procédure d'authentification.

Dans un mode particulier de réalisation de l'invention, tous les registres de la première mémoire non volatile peuvent être protégés par l'invention.

En variante, la première mémoire non volatile comporte, d'une part, les données sensibles protégées par l'invention et, d'autre part, des données non protégées dites "données d'un autre type".

L'homme du métier comprendra que, si l'utilisateur demande à lire les données d'un autre type pendant la phase de personnalisation, ces données lui sont présentées de façon non transformée.

Dans un mode particulier, l'entité électronique selon l'invention comporte une structure de données, par exemple une table, qui définit:
- les données de l'autre type; et
- pour les données sensibles, comment celles-ci doivent être transformées avant présentation pendant la phase de personnalisation.

Le procédé mis en oeuvre par l'invention permet ainsi de déterminer de façon certaine si la phase de personnalisation s'est terminée normalement, c'est-à-dire par le positionnement de l'indicateur, ou non, en accédant aux données sensibles en lecture.

Dans le cas contraire, l'entité électronique ne sera pas utilisable normalement par l'utilisateur, l'obtention de données transformées, d'un message d'erreur, ou de données de substitution étant détectée par l'utilisateur ou par le dispositif externe. Par exemple, dans le cas d'un contrôle d'identité, le contrôleur pourra immédiatement réagir, s'il obtient une photographie transformée du porteur de la carte.

Dans un mode particulier de réalisation, les différentes étapes du procédé de personnalisation sont déterminées par des instructions de programmes d'ordinateurs.

En conséquence, l'invention vise aussi un programme d'ordinateur sur un support d'informations, ce programme étant susceptible d'être mis en oeuvre par un processeur, ce programme comportant des instructions adaptées à la mise en oeuvre des étapes du procédé de personnalisation tel que mentionné ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figue 1 représente une entité électronique conforme à l'invention, dans un mode particulier de réalisation ;
- les figures 2A à 2C représentent trois exemples de transformations de données sensibles pouvant être mises en oeuvre dans l'invention ;
- la figure 3 représente, sous forme d'organigramme, les principales étapes d'une procédure de personnalisation conforme à un mode particulier de réalisation de l'invention ;
- la figure 4A représente une procédure de lecture d'une donnée sensible conforme à un mode particulier de réalisation de l'invention ;
- la figure 4B représente une procédure de lecture d'une donnée sensible de l'art antérieur ; et
- la figure 5 représente un mode particulier de réalisation de l'invention pouvant être utilisé pour protéger l'indicateur.

### Description détaillée de plusieurs modes de réalisation de l'invention

Dans la présente invention, la "modification" d'une donnée sensible désigne soit son effacement, soit l'écriture d'une telle donnée.

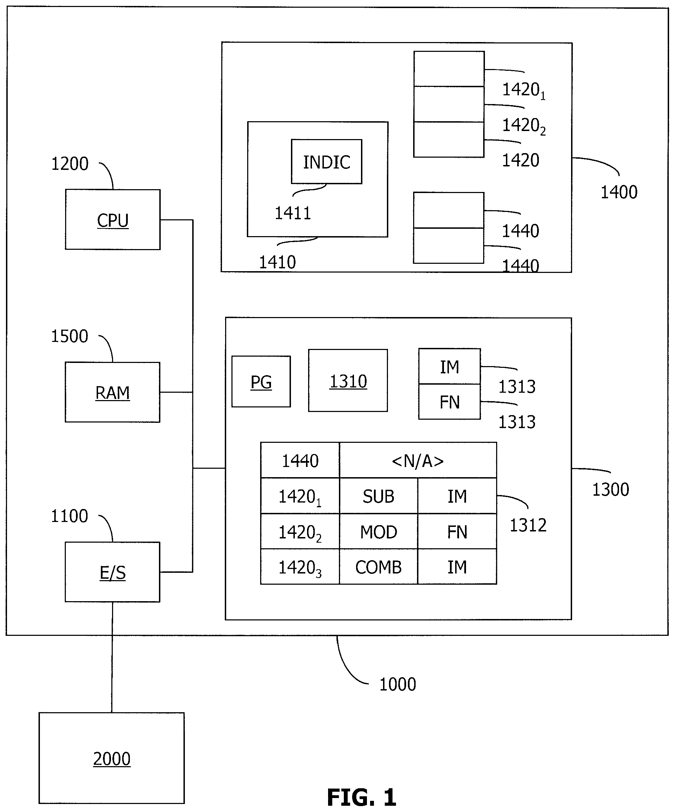

La figure 1 représente une entité électronique 1000 conforme à un mode particulier de réalisation de l'invention.

Dans l'exemple de réalisation décrit ici, cette entité électronique 1000 est une carte à microcircuit conforme à la norme ISO 7816.

Cette carte à microcircuit a l'architecture matérielle générale d'un ordinateur. Elle comporte notamment un processeur 1200, une mémoire morte de type ROM 1300, une mémoire non volatile 1400 et une mémoire vive 1500.

Dans l'exemple de réalisation décrit ici, la carte à microcircuit 1000 comporte des moyens 1100 d'entrée/sortie aptes à communiquer avec un dispositif externe, à savoir un lecteur 2000 de cette carte.

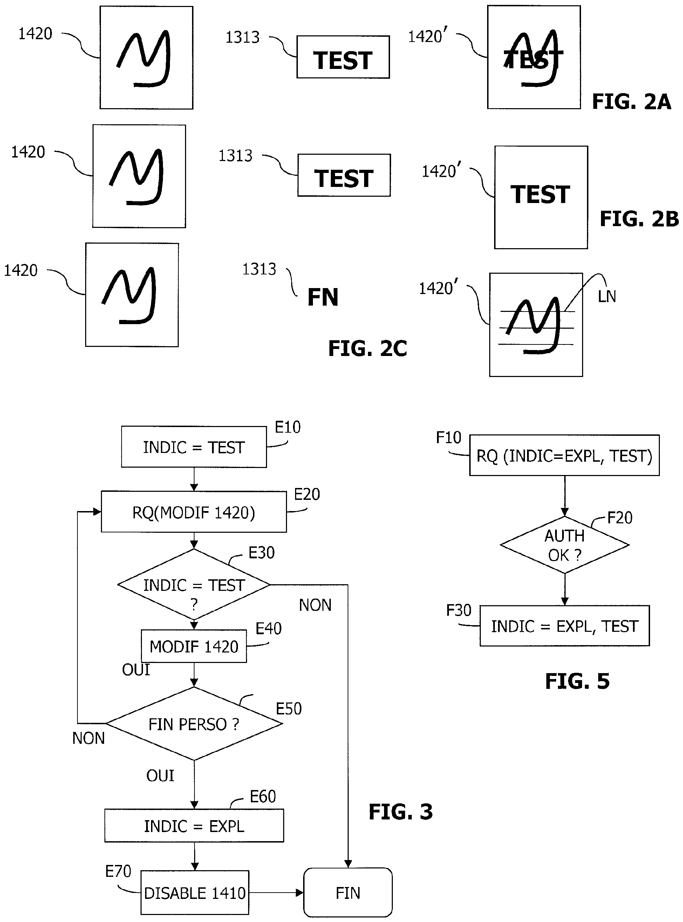

La mémoire morte 1300 constitue un support d'enregistrement conforme à l'invention sur lequel est enregistré un programme d'ordinateur PG comprenant des instructions pour exécuter les étapes d'un procédé de personnalisation conforme à l'invention, les principales étapes de ce procédé étant décrites ultérieurement en référence aux figures 3, 4A et 5.

La mémoire vive 1500 comporte des registres permettant l'exécution du programme PG par le processeur 1200.

Dans l'exemple de réalisation décrit ici, la mémoire non volatile 1400 comporte des registres pour mémoriser des données sensibles 1420 et des registres pour protéger d'autres données 1440 dites d'un autre type.

Les données sensibles peuvent par exemple être constituées par une application, des données cryptographiques ou des données d'identification d'un utilisateur de la carte à microcircuits 1000.

Dans l'exemple de réalisation décrit ici, la mémoire non volatile 1400 comporte une zone 1410 dans laquelle on ne peut écrire qu'une seule fois.

Dans l'exemple de réalisation décrit ici, cette zone comporte un registre 1411 pour mémoriser un indicateur INDIC pouvant prendre deux valeurs déterminées, à savoir :
- la valeur "TEST" lorsque la carte à microcircuit est en phase de personnalisation ou dans une phase antérieure à la phase de personnalisation ; et
- la valeur "EXPL" lorsque la carte à microcircuit est en phase d'exploitation.

Dans l'exemple de réalisation décrit ici, la mémoire morte 1300 de type ROM comporte un système d'exploitation 1310.

Dans le mode de réalisation décrit ici, la mémoire morte de type ROM 1300 comporte deux objets 1313 pouvant être utilisés pour transformer des données sensibles avant présentation à l'utilisateur, si l'indicateur INDIC ne représente pas que la procédure de personnalisation est terminée.

Au moins un de ces objets 1313 pourrait être mémorisé dans le système d'exploitation 1310.

En l'espèce, ces objets sont une image IM pouvant être combinée avec une donnée sensible et une fonction FN pouvant être appliquée à une donnée sensible.

Dans l'exemple de réalisation décrit ici, la mémoire morte de type ROM 1300 comporte une structure de données, sous la forme d'une table 1312, qui permet de définir, d'une part, les données sensibles 1420₁ et 1420₂ et, d'autre part, les données d'un autre type 1440. Pour chaque donnée sensible, cette table 1312 indique comment elles doivent être transformées avant d'être présentées à l'utilisateur tant que l'indicateur INDIC n'a pas été positionné pour représenter la fin de la procédure de personnalisation.

Plus précisément, dans cet exemple, la table 1312 définit ;
- que les données sensibles 1420₁ doivent être substituées par l'image IM ;
- que les données sensibles 1420₂ doivent être transformées par exécution de la fonction FN ;
- et que les données sensibles 1420₃ doivent être combinées avec l'image IM.

On remarquera que, dans cet exemple de réalisation, l'objet IM peut être utilisé de deux façons différentes, à savoir en substitution et en combinaison, pour transformer une donnée sensible 1420₃ et 1420₁.

Bien entendu, il peut être défini, dans la table 1312, que plusieurs opérations sont à appliquer à une donnée sensible pour sa transformation. Il peut par exemple s'agir en l'espèce, d'une part, de la substitution par une image, puis par la transformation de cette image par la fonction FN.

En référence aux figures **2A à 2C****,** nous allons maintenant donner trois exemples de transformation de données sensibles pouvant être utilisées dans l'invention.

Dans chacun de ces trois exemples, la donnée sensible 1420 est constituée par une image, par exemple par une photographie d'identité de l'utilisateur.

A la figure 2A, cette image 1420 est combinée avec un objet textuel 1313 "TEST" pour donner la donnée sensible 1420' obtenue par superposition du texte TEST sur l'empreinte digitale.

A la figure 2B, la donnée transformée 1420' est l'objet 1313 lui-même, la transformation consistant, dans cet exemple, à substituer la donnée sensible par l'objet.

A la figure 2C, la donnée transformée 1420' est le résultat d'une fonction FN de traitement d'image 1313, sur l'empreinte digitale 1420, cette fonction consistant à modifier la valeur de certains pixels de cette empreinte, pour constituer des raies LN noires.

En référence à la **figure 3****,** nous allons maintenant décrire les principales étapes E10 à E70 d'une procédure de personnalisation conforme à l'invention.

Au cours d'une étape E10, on initialise l'indicateur INDIC du registre 1411 avec la valeur TEST.

On suppose ensuite que l'on reçoit, à l'étape E20, une requête pour modifier une donnée sensible 1420 de la mémoire non volatile 1400.

Cette requête peut être une requête pour effacer la donnée sensible ou pour écrire une donnée sensible dans cette mémoire.

La réception de cette requête est suivie par un test E30 au cours duquel on vérifie si l'indicateur INDIC a la valeur TEST.

Si tel n'est pas le cas, cela signifie que la procédure de personnalisation s'est terminée normalement, par modification de l'indicateur, celui-ci étant positionné à la valeur EXPL.

Auquel cas, la modification de la donnée sensible 1420 est refusée.

En revanche, si l'indicateur INDIC a la valeur TEST, le résultat du test E30 est positif. Ce test est alors suivi par la modification de la donnée sensible 1420 conformément à la requête reçue à l'étape E20.

Puis, on détermine, au cours d'un test F50, si la procédure de personnalisation doit se terminer.

Si tel est le cas, on positionne la valeur de l'indicateur INDIC à la valeur EXPL, à l'étape E60.

Dans le mode particulier de réalisation décrit ici, on interdit toute nouvelle écriture dans la zone 1410 et en particulier dans le registre 1411 mémorisant l'indicateur INDIC. Cette étape E70 est optionnelle.

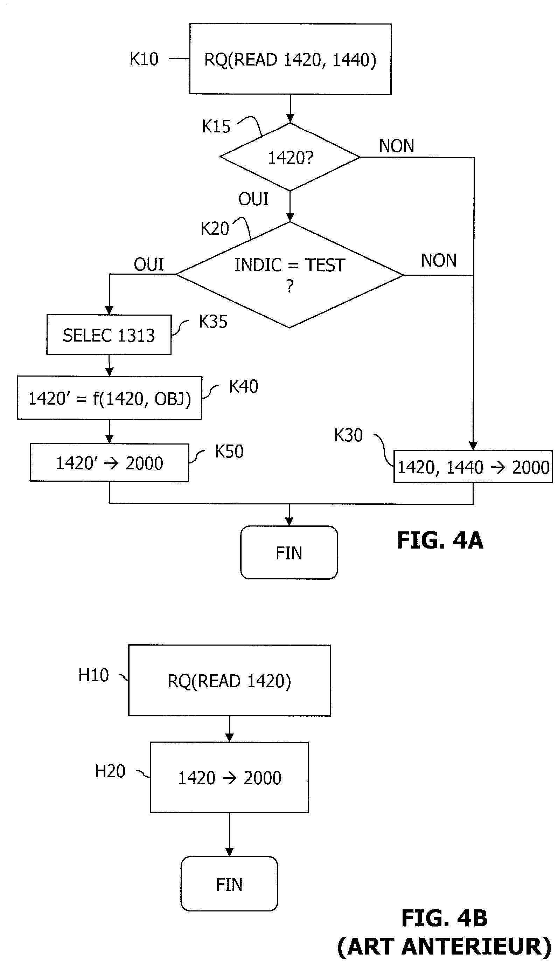

En référence à la **figure 4A****,** nous allons maintenant décrire comment se fait la lecture d'une donnée sensible dans la mémoire 1400.

Nous supposerons que le processeur 1200 reçoit, à l'étape K10, une requête pour lire une donnée de la mémoire non volatile 1400, à savoir une donnée sensible 1420 ou une donnée d'un autre type 1440. Cette requête peut avoir été émise par le lecteur 2000 et reçue, via les moyens d'entrée/sortie 1100.

Au cours d'un test K15, on détermine si la requête vise une donnée sensible 1420 ou une donnée 1440 d'un autre type.

S'il est déterminé, que la donnée à lire est d'un autre type, le test K15 est suivi par une étape K30 au cours de laquelle on présente, à l'émetteur de la requête reçue à l'étape K10, cette donnée 1440 telle quelle, que l'on soit en phase d'exploitation ou en phase de personnalisation.

S'il est déterminé que la donnée à lire est une donnée sensible, on vérifie au cours d'un test K20, on vérifie si l'indicateur INDIC a la valeur TEST.

Si tel est le cas, cela signifie, soit que la carte à microcircuit 1000 est en phase de personnalisation, soit que celle-ci est terminée mais que, de façon dommageable, l'indicateur n'a pas été positionné à la valeur EXPL.

Conformément à l'invention, la donnée sensible 1420 doit être transformée avant présentation à l'émetteur de la requête reçue à l'étape K10.

Dans l'exemple de réalisation donné ici, la transformation à apporter à cette donnée sensible est lue dans la structure de donnée 1312 de la mémoire ROM 1300 au cours d'une étape K35.

Cette étape K35 est suivie par une étape K40 de transformation ou de transformation de la donnée à proprement parler. On obtient ainsi une valeur transformée 1420' par exemple du type de celles présentées précédemment en référence aux figures 2A, 2B ou 2C.

Cette donnée transformée 1420' est alors présentée à l'utilisateur ou au lecteur émetteur de la requête reçue à l'étape K10, au cours d'une étape K50.

S'il est déterminé, au cours du test K20, que l'indicateur INDIC a la valeur EXPL, la donnée sensible 1420 elle-même est envoyée, au cours d'une étape K30, à l'utilisateur ou au lecteur.

Par conséquent, deux solutions sont possibles :
- soit l'utilisateur ou le lecteur reçoit une donnée sensible elle-même, ce qui signifie que la procédure d'exploitation s'est terminée de façon normale, avec écriture de l'indicateur INDIC à la valeur EXPL ;
- soit il reçoit une donnée 1420' transformée, ce qui signifie que l'on est toujours en phase de personnalisation ou que celle-ci s'est terminée de façon anormale, c'est-à-dire sans modification de l'indicateur INDIC.

Pour bien faire comprendre l'intérêt de l'invention, on a représenté la procédure de lecture d'une donnée sensible telle qu'elle est mise en oeuvre dans l'état actuel de la technique, à la **figure 4B****.**

Lorsque l'entité électronique reçoit, au cours d'une étape H10, une requête pour lire une donnée sensible 1420, cette donnée est systématiquement renvoyée, au lecteur ou à l'utilisateur, telle qu'elle, sans transformation, au cours d'une étape H20.

Il est donc impossible de déterminer si cette donnée sensible a été définie en phase de personnalisation ou d'exploitation.

La **figure 5** représente un mode particulier de réalisation de l'invention dans lequel on protège l'indicateur IND-IC par une procédure d'authentification.

Plus précisément, lorsque le processeur 1200 reçoit, au cours d'une étape F10, une requête pour modifier l'indicateur, soit à la valeur EXPL d'exploitation, soit à la valeur TEST de personnalisation, on met en oeuvre une procédure F20 d'authentification de l'utilisateur ayant émis la requête ou des moyens utilisés par l'utilisateur pour émettre cette requête.

La modification de l'indicateur est effectivement mise en oeuvre, au cours d'une étape F30, uniquement si l'authentification réussit.

On notera que cette procédure est très intéressante car elle permet, à une personne autorisée de confiance, de mettre en oeuvre plusieurs fois la procédure de personnalisation, même après exploitation.

## Revendications

1. Entité électronique (1000) comportant :
- une première mémoire non volatile (1400) comportant au moins une donnée sensible (1420) ;
- un indicateur (1411) représentatif du fait que ladite donnée sensible (1420) peut être modifiée seulement si ledit indicateur a une valeur (TEST) déterminée, ledit indicateur étant initialisé à ladite valeur;
ladite entité étant **caractérisée en ce qu'**elle comporte :
- des moyens (1100) pour fournir ladite donnée sensible (1420) à un dispositif externe (2000), en réponse à une requête, si et seulement si ledit indicateur a une valeur (EXPL) différente de ladite valeur déterminée.

2. Entité électronique selon la revendication 1 **caractérisée en ce qu'**elle comporte des moyens (1100) pour fournir audit dispositif externe (2000), en réponse à ladite requête, une donnée (1420') transformée, obtenue à partir de ladite donnée sensible (1420), et d'un objet (1313) mémorisé dans une deuxième mémoire non volatile (1300), si ledit indicateur a ladite valeur déterminée (TEST).

3. Entité électronique selon la revendication 2, **caractérisée en ce que** ladite deuxième mémoire non volatile (1300) est une mémoire non réinscriptible.

4. Entité électronique selon l'une quelconque des revendications 1 à 3, **caractérisé en ce que** ladite donnée sensible (1420) est constituée par un élément choisi parmi une application, une donnée cryptographique et une donnée d'identification d'un utilisateur de ladite entité, par exemple une photographie.

5. Entité électronique selon l'une quelconque des revendications 1 à 4, **caractérisée en ce que** ledit indicateur (1411) est mémorisé dans un registre (1410) de ladite première mémoire non volatile (1400), ledit registre ne pouvant être modifié qu'une seule fois.

6. Entité électronique selon l'une quelconque des revendications 2 ou 3, **caractérisée en ce que** ledit objet (1313) est une marque, et ladite donnée transformée (1420'), une combinaison de ladite donnée sensible (1420) avec ladite marque (1313).

7. Entité électronique selon l'une quelconque des revendications 2 ou 3, **caractérisée en ce que** ledit objet (1313) est une fonction exécutable par ladite entité (1000), ladite donnée transformée (1420') étant le résultat de ladite fonction appliquée à ladite donnée sensible (1420).

8. Entité électronique selon l'une quelconque des revendications 2 ou 3, **caractérisée en ce que** ledit objet (1313) est une marque, et ladite donnée transformée (1420') est ladite marque (1313).

9. Entité électronique selon l'une quelconque des revendications 2 ou 3, **caractérisée en ce que** ledit objet (1313) est une fonction exécutable par ladite entité (1000), ladite donnée transformée (1420') étant le résultat de ladite fonction appliquée à ladite donnée sensible (1420).

10. Entité électronique selon l'une quelconque des revendications 2 ou 3, **caractérisée en ce que** ladite première mémoire non volatile (1400) comporte en sus desdites données sensibles (1420) des données (1440) d'un autre type et **en ce qu'**elle comporte une structure de données (1312) qui définit lesdites données d'un autre type et comment lesdites données sensibles (1420) doivent être transformées.

11. Procédé de personnalisation d'une entité électronique (1000) comportant :
- une première mémoire non volatile (1400) comportant au moins une donnée sensible (1420) ;
- un indicateur (1411) représentatif du fait que ladite donnée sensible (1420) peut être modifiée (E40) seulement si ledit indicateur a une valeur (TEST) déterminée, ledit indicateur étant initialisé (E10) à ladite valeur;
ledit procédé étant **caractérisé en ce qu'**il comporte :
- une étape (K30, K50) pour fournir ladite donnée sensible (1420) à un dispositif externe (2000) à ladite entité électronique (1000), en réponse à une requête si et seulement si ledit indicateur a une valeur (EXPL) différente de ladite valeur déterminée.

12. Procédé de personnalisation selon la revendication 11, dans lequel ledit indicateur (1411) est mémorisé dans un registre (1410) de ladite première mémoire non volatile (1400), **caractérisé en ce qu'**il comporte une étape (E70) pour empêcher toute écriture dans ledit registre à l'issue de ladite personnalisation.

13. Programme d'ordinateur (PG) comportant des instructions pour l'exécution des étapes du procédé de personnalisation selon l'une quelconque des revendications 11 à 12 lorsque ledit programme est exécuté par un processeur (1200).

14. Support d'enregistrement (1300) lisible par un processeur (1200) sur lequel est enregistré un programme d'ordinateur (PG) comprenant des instructions pour l'exécution des étapes du procédé de personnalisation selon l'une quelconque des revendications 11 à 12.

## Patentansprüche

1. Elektronikeinheit (1000), umfassend:
- einen ersten nichtflüchtigen Speicher (1400), umfassend mindestens ein sensibles Datum (1420),
- einen Indikator (1411), der für die Tatsache repräsentativ ist, dass das sensible Datum (1420) nur dann geändert werden kann, wenn der Indikator einen bestimmten Wert (TEST) hat, wobei der Indikator auf den Wert initialisiert ist,
wobei die Einheit **dadurch gekennzeichnet ist, dass** sie umfasst:
- Mittel (1100), um das sensible Datum (1420) an eine externe Vorrichtung (2000) als Antwort auf eine Anfrage, dann und nur dann zu liefern, wenn der Indikator einen unterschiedlichen Wert (EXPL) zu dem bestimmten Wert hat.

2. Elektronikeinheit gemäß Anspruch 1, **dadurch gekennzeichnet, dass** sie Mittel (1100) umfasst, um an die externe Vorrichtung (2000) als Antwort auf die Anfrage ein transformiertes Datum (1420') zu liefern, das aus dem sensiblen Datum (1420) erhalten wurde, und einem in einem zweiten nichtflüchtigen Speicher (1300) gespeicherten Objekt (1313), wenn der Indikator den bestimmten Wert (TEST) hat.

3. Elektronikeinheit gemäß Anspruch 2, **dadurch gekennzeichnet, dass** der zweite nicht flüchtige Speicher (1300) ein nicht wiederbeschreibbarer Speicher ist.

4. Elektronikeinheit gemäß einem der Ansprüche 1 bis 3, **dadurch gekennzeichnet, dass** das sensible Datum (1420) von einem Element gebildet ist, das unter einer Anwendung, einem kryptografischen Datum und einem Datum zur Identifizierung eines Benutzers der Einheit, beispielsweise einem Foto, ausgewählt ist.

5. Elektronikeinheit gemäß einem der Ansprüche 1 bis 4, **dadurch gekennzeichnet, dass** der Indikator (1411) in einem Register (1410) des ersten nichtflüchtigen Speichers (1400) gespeichert ist, wobei das Register nur einmal verändert werden kann.

6. Elektronikeinheit gemäß einem der Ansprüche 2 oder 3, **dadurch gekennzeichnet, dass** das Objekt (1313) eine Marke ist, und das transformierte Datum (1420') eine Kombination des sensiblen Datums (1420) und der Marke (1313) ist.

7. Elektronikeinheit gemäß einem der Ansprüche 2 oder 3, **dadurch gekennzeichnet, dass** das Objekt (1313) eine von der Einheit (1000) ausführbare Funktion ist, wobei das transformierte Datum (1420') das Resultat der an dem sensiblen Datum (1420) angewandten Funktion ist.

8. Elektronikeinheit gemäß einem der Ansprüche 2 oder 3, **dadurch gekennzeichnet, dass** das Objekt (1313) eine Marke ist, und das transformierte Datum (1420') die Marke (1313) ist.

9. Elektronikeinheit gemäß einem der Ansprüche 2 oder 3, **dadurch gekennzeichnet, dass** das Objekt (1313) eine von der Einheit (1000) ausführbare Funktion ist, wobei das transformierte Datum (1420') das Resultat der an dem sensiblen Datum (1420) angewandten Funktion ist.

10. Elektronikeinheit gemäß einem der Ansprüche 2 oder 3, **dadurch gekennzeichnet, dass** der erste nichtflüchtige Speicher (1400) zusätzlich zu den sensiblen Daten (1420) Daten (1440) eines anderen Typs umfasst und dass er eine Datenstruktur (1312) umfasst, die die Daten eines anderen Typs und wie die sensiblen Daten (1420) zu transformieren sind definiert.

11. Verfahren zur Personalisierung einer Elektronikeinheit (1000), umfassend:
- einen ersten nichtflüchtigen Speicher (1400), umfassend mindestens ein sensibles Datum (1420),
- einen Indikator (1411), der für die Tatsache repräsentativ ist, dass das sensible Datum (1420) nur dann geändert (E40) werden kann, wenn der Indikator einen bestimmten Wert (TEST) hat, wobei der Indikator auf den Wert initialisiert (E10) ist,
wobei das Verfahren **dadurch gekennzeichnet ist, dass** es umfasst:
- einen Schritt (K30, K50), um das sensible Datum (1420) an eine externe Vorrichtung (2000) der Elektronikeinheit (1000) als Antwort auf eine Anfrage dann und nur dann zu liefern, wenn der Indikator einen unterschiedlichen Wert (EXPL) zu dem bestimmten Wert hat.

12. Personalisierungsverfahren gemäß Anspruch 11, bei dem der Indikator (1411) in einem Register (1410) des ersten nichtflüchtigen Speichers (1400) gespeichert ist, **dadurch gekennzeichnet, dass** es einen Schritt (E70) umfasst, um jedes Schreiben in das Register nach der Personalisierung zu verhindern.

13. Computerprogramm (PG), umfassend Befehle für die Ausführung der Schritte des Personalisierungsverfahrens gemäß einem der Ansprüche 11 bis 12, wenn das Programm von einem Prozessor (1200) ausgeführt wird.

14. Aufzeichnungsträger (1300), der von einem Prozessor (1200) lesbar ist, auf dem ein Computerprogramm (PG) aufgezeichnet ist, umfassend Befehle für die Ausführung der Schritt des Personalisierungsverfahrens gemäß einem der Ansprüche 11 bis 12.

## Claims

1. An electronic entity (1000), including:
- a first non-volatile memory (1400) including at least one sensitive datum (1420);
- an indicator (1411) representative of the fact that said sensitive datum (1420) can be modified only if said indicator has a determined value (TEST), said indicator being initialized at said value;
said entity being **characterized in that** it includes:
- means (1100) for providing said sensitive datum (1420) to an outside device (2000), in response to a request, if and only if said indicator has a value (EXPL) different from said determined value.

2. The electronic entity according to claim 1, **characterized in that** it includes means (1100) for providing said outside device (2000), in response to said request, with a converted datum (1420'), obtained from said sensitive datum (1420), and an object (1313) stored in a second non-volatile memory (1300), if said indicator has said determined value (TEST).

3. The electronic entity according to claim 2, **characterized in that** said second non-volatile memory (1300) is not a rewritable memory.

4. The electronic entity according to any one of claims 1 to 3, **characterized in that** said sensitive datum (1420) is made up of an element chosen from among an application, a cryptographic datum and an identification datum of a user of said entity, for example a photograph.

5. The electronic entity according to any one of claims 1 to 4, **characterized in that** said indicator (1411) is stored in a register (1410) of said first non-volatile memory (1400), said register only being able to be modified once.

6. The electronic entity according to any one of claims 2 or 3, **characterized in that** said object (1313) is a mark, and said converted datum (1420') is a combination of said sensitive datum (1420) with said mark (1313).

7. The electronic entity according to any one of claims 2 or 3, **characterized in that** said object (1313) is a function executable by said entity (1000), said converted datum (1420') being the result of said function applied to said sensitive datum (1420).

8. The electronic entity according to any one of claims 2 or 3, **characterized in that** said object (1313) is a mark, and said converted datum (1420') is said mark (1313).

9. The electronic entity according to any one of claims 2 or 3, **characterized in that** said object (1313) is a function executable by said entity (1000), said converted datum (1420') being the result of said function applied to said sensitive datum (1420).

10. The electronic entity according to any one of claims 2 or 3, **characterized in that** said first non-volatile memory (1400) includes, in addition to said sensitive data (1420), data (1440) of another type, and **in that** it includes a data structure (1312) that defines said data of another type and how said sensitive data (1420) must be converted.

11. A method for customizing an electronic entity (1000), including:
- a first non-volatile memory (1400) including at least one sensitive datum (1420);
- an indicator (1411) representative of the fact that said sensitive datum (1420) can be modified (E40) only if said indicator has a determined value (TEST), said indicator being initialized (E10) at said value;
said method being **characterized in that** it includes:
- a step (K30, K50) for providing said sensitive datum (1420) to an external device (2000) with respect to said electronic entity (1000), in response to a request if and only if said indicator has a value (EXPL) different from said determined value.

12. The customization method according to claim 11, wherein said indicator (1411) is stored in a register (1410) of said first non-volatile memory (1400), **characterized in that** it includes a step (E70) for preventing any writing in said register at the end of said customization.

13. A computer program (PG) including instructions for carrying out steps of the customization method according to any one of claims 11 to 12 when said program is executed by a processor (1200).

14. A recording medium (1300) readable by a processor (1200) on which a computer program (PG) is stored comprising instructions for carrying out the steps of the customization method according to any one of claims 11 to 12.
